**Europäisches Patentamt**

**European Patent Office**

**Office européen des brevets**

(19)

(11) Veröffentlichungsnummer: **0 382 025**

**A1**

(12) **EUROPÄISCHE PATENTANMELDUNG**

(21) Anmeldenummer: **90101639.4**

(22) Anmeldetag: **27.01.90**

(51) Int. Cl.5: **B01F 3/08**

(30) Priorität: **08.02.89 DE 3903694**

(43) Veröffentlichungstag der Anmeldung:
**16.08.90 Patentblatt 90/33**

(84) Benannte Vertragsstaaten:
**AT BE CH DE DK ES FR GB GR IT LI NL SE**

(71) Anmelder: **ORTMANN & HERBST GMBH**
**Alte Wöhr 7**
**D-2000 Hamburg 60(DE)**

(72) Erfinder: **Mette, Manfred, Dr.**
**Ringstrasse 19a**
**D-2000 Hamburg 73(DE)**

(74) Vertreter: **Schaefer, Konrad**
**Gehölzweg 20**
**D-2000 Hamburg 70(DE)**

(54) **Getränkemischvorrichtung.**

(57) Eine Vorrichtung zum chargenweisen Mischen eines Getränkes aus flüssigen Komponenten, mit Abmeßbehältern (3, 10, 11, 17) für die einzelnen Komponenten, von denen Abmeßbehälter (11, 17) der kleineren Komponenten restlos gefüllt und beim Entleeren der größten Komponente von dieser durchströmt werden ist dadurch gekennzeichnet, daß Abmeßbehälter der kleineren Komponenten ein einstellbares Volumen aufweisen.

EP 0 382 025 A1

## Getränkemischvorrichtung

Die Erfindung betrifft eine Vorrichtung zum Mischen von Getränken nach dem Oberbegriff des Anspruchs 1.

Getränkemischvorrichtungen dienen zum Mischen von Getränken aus flüssigen Komponenten. Dabei handelt es sich beispielsweise um Fruchtsäfte oder Limonaden, die aus gegebenenfalls karbonisiertem Wasser als Hauptkomponente, Sirup (Zuckerlösung) als kleinere Komponente und gegebenenfalls weiteren noch kleineren Komponenten (Konzentraten) gemischt werden. Es kommt dabei auf hohe Durchsatzleistung an, typischerweise in Höhe von etwa 500 Liter Fertiggetränk pro Minute. Ferner muß die Dosierung außerordentlich exakt sein, um Geschmacksabweichungen des Getränkes zu vermeiden.

Nach dem älteren Stand der Technik wird kontinuierlich mit Dosierpumpen gemischt, was angesichts der Komplexität von Dosierpumpen zu hohen Kosten und hohem Wartungsaufwand führt.

Einfacher sind gattungsgemäße Vorrichtungen, die chargenweise in Abmeßbehältern dosieren. Eine solche Konstruktion ist aus der DE-PS 31 32 706 bekannt.

Bei dieser bekannten Konstruktion ist ein Abmeßbehälter für die größte Komponente vorgesehen (üblicherweise Wasser), der das Abmeßvolumen über eine Füllstandsregelung einstellt, was bei großen Behältern befriedigend und einfach arbeitet. Die Abmeßbehälter für die kleineren Komponenten sind dagegen als restlos gefüllte Behälter festen Volumens ausgebildete, in denen für jede Charge das Volumen des Abmeßbehälters sehr präzise abgemessen wird. Eine solche Mischvorrichtung ist sehr einfach und wartungsunkompliziert im Aufwand und vermeidet insbesondere die teuren und komplizierten Dosierpumpen.

Nachteilig bei dieser bekannten Konstruktion ist allerdings die Tatsache, daß zwar das Verhältnis der größten Komponente zu den kleineren Komponenten über die Füllstandsregelung in dem Abmeßbehälter der größten Komponente exakt eingestellt werden kann, das Verhältnis der kleineren Komponenten untereinander kann aber nicht verstellt werden, da deren Abmeßbehälter ein festes Volumen aufweisen. Eine solche Mischvorrichtung muß also mit fester Grundeinstellung betrieben werden. Nachträgliche Änderungen des Mischungsverhältnisses, insbesondere Anpassungen an schwankende Konzentrat- oder Sirupzusammensetzungen oder Feinkalibrierungen der Anlage sind nicht möglich.

Aufgabe der vorliegenden Erfindung ist es daher, eine Getränkemischvorrichtung der eingangs genannten Art zu schaffen, die es gestattet, alle Getränkekomponenten in ihrem Verhältnis einstellen zu können, ohne die Vorteile der bekannten Konstruktion aufzugeben.

Diese Aufgabe wird erfindungsgemäß mit den Merkmalen des Kennzeichnungsteiles des Anspruchs 1 gelöst.

Die Abmeßbehälter der kleineren Komponente behalten den Vorteil des gattungsgemäßen Standes der Technik bei, der darin besteht, daß alle kleineren Komponenten, bei denen die Dosierung sehr genau sein muß, in restlos gefüllten Behältern abgemessen werden, woraus sich bei einfachsten Mitteln eine hohe Abmessgenauigkeit ergibt. Dennoch sind die kleineren Komponenten untereinander einstellbar durch Verstellung des Volumens der kleineren Abmeßbehälter. Diese Volumenverstellung kann mechanisch sehr einfach erfolgen, beispielsweise durch gezieltes Eindrücken einer elastischen Wand mit Hilfe eines Stellmotors. Auf diese Weise läßt sich die Getränkezusammensetzung präzise voreinstellen oder bei Schwankungen in den Komponenten auch während des Betriebes nachregeln, was nach dem Stand der Technik nicht möglich war. Alle kleineren Abmeßbehälter können erfindungsgemäß mit einstellbarem Volumen ausgebildet sein. Wenn auch der Abmeßbehälter für die größte Komponente beispielsweise über eine Füllstandsregelung einstellbar abmißt, wären sämtliche Komponenten einzeln beeinflußbar. Dies ist aber nicht unbedingt erforderlich. Eine der Komponenten, vorzugsweise eine der kleineren Komponenten, kann mit fester Einstellung dosiert werden. Dann wäre einer der kleineren Abmeßbehälter mit nicht verstellbarem festem Volumen als einfacher Topf auszubilden, was die Vorrichtung verbilligt.

Vorteilhaft sind die Merkmale des Anspruches 2 vorgesehen. Eine solche Kolben/Zylinder-Anordnung kann sehr kostengünstig und präzise einstellbar als volumeneinstellbarer Abmeßbehälter verwendet werden. es ergibt sich der Vorteil eines sehr großen Verstellbereiches.

Weiterhin vorteilhaft sind die Merkmale des Anspruches 3 vorgesehen. Ein abgedichtet in den Abmeßbehälter einschiebbarer Verdrängerstab verstellt das Volumen des Abmeßbehälters auf äußerst präzise und einfache Weise. Ebenso, wie bei der Kolben/Zylinder-Anordnung kann hier mit einer linearen Verstelleinrichtung, beispielsweise einem computergesteuerten Stellmotor, gearbeitet werden. Ein Verdrängerstab kann bei großem Stabquerschnitt für einen großen Verstellbereich eingesetzt werden oder bei kleinem Stabquerschnitt und entsprechend kleinem Verstellbereich für feinste Verstellungen sorgen, beispielsweise auch zusätzlich bei einer Kolben/Zylinder-Ausbildung des Abmeßbehälters, wobei dann getrennte Grob- und Feineinstellungen möglich sind.

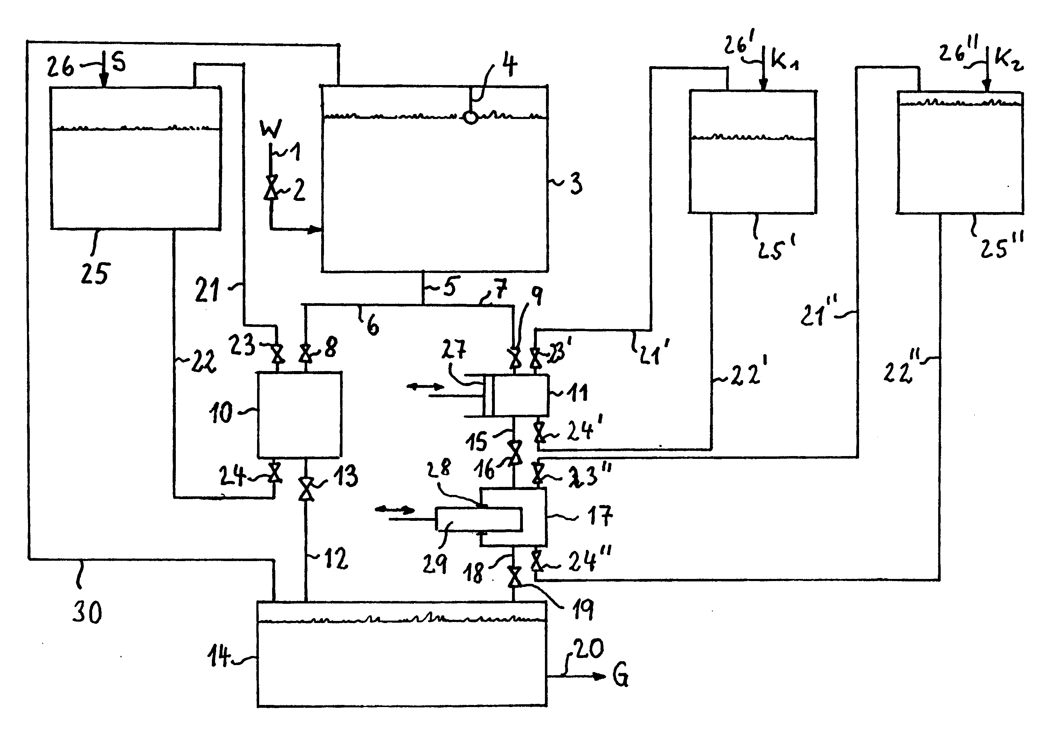

In der Zeichnung ist die Erfindung beispielsweise und schematisch dargestellt.

Es handelt sich um eine Mischvorrichtung, die ein Getränk G chargenweise mischt aus der größten Komponente Wasser W, einer Sirupkomponente S und zwei Konzentratkomponenten $K_1$ und $K_2$.

Die größte Komponente, im vorliegenden Falle also Wasser W, wird beispielsweise aus einem nichtdargestellten Wasservorratsbehälter über eine Leitung 1 und ein Ventil 2 einem Wasserabmeßbehälter 3 als Abmeßbehälter der größten Komponente zugeführt, der mit einem Füllstandsensor 4 ausgerüstet ist, der das Ventil 2 steuert. Der Wasserabmeßbehälter 3 wird abwechselnd bis zum voreingestellten Füllstand gefüllt und sodann restlos entleert.

Das Wasser läuft dabei aus dem Wasserabmeßbehälter 3 durch eine Leitung 5 ab, die in Leitungen 6, 7 verzweigt, welche jeweils mit Ventilen 8, 9 ausgerüstet sind und von oben in einen ersten Abmeßbehälter 10 für eine kleinere Komponente und einen zweiten Abmeßbehälter 11 für eine kleinere Komponente einströmen. Aus dem Abmeßbehälter 10 fließt das Wasser über eine Leitung 12 mit Ventil 13 nach unten ab in einen Sammelbehälter 14. Aus dem Abmeßbehälter 11 fließt das Wasser unten ab über eine Leitung 15 mit Ventil 16 in einen darunter aufgestellten dritten Abmeßbehälter 17 für eine kleinere Komponente, durchströmt diesen und läuft nach unten ab über eine Leitung 18 mit Ventil 19 wiederum in den Sammelbehälter 14.

Die Gasräume des Sammelbehälters 14 und des Wasserabmeßbehälters 3 sind mit einer Leitung 30 verbunden, die das freie Ablaufen des Wassers gewährleistet.

Aus dem Sammelbehälter 14 wird das fertig angemischte Getränk G über eine Leitung 20 abgezogen und beispielsweise einem nicht dargestellten Füller zugeführt.

Die drei Abmeßbehälter 10, 11, 17 für die kleineren Komponenten werden jeweils restlos mit der entsprechenden Komponente gefüllt. Der Abmeßbehälter 10 ist mit Leitungen 21, 22, in denen Ventile 23, 24 sitzen, an den Komponentenvorratsbehälters 25 für Sirup S angeschlossen. Die anderen beiden Komponentenabmeßbehälter 11, 17 sind in identischer Weise an Komponentenvorratsbehälter 25′ und 25″ für kleinere Komponenten, im vorliegenden Falle Konzentratkomponenten $K_1$ und $K_2$ angeschlossen. Die anschließenden Leitungen und Ventile sind, wie beim zuvor beschriebenen Komponentenabmeßbehälter 10 ausgebildet und mit denselben Bezugszeichen versehen, jeweils mit einem bzw. zwei Beistrichen versehen. In den Komponentenvorratsbehältern 25, 25′ und 25″ werden ständig die jeweiligen Komponenten vorrätig gehalten und über Zuleitungen 26, 26′ bzw. 26″ ergänzt.

Die dargestellte Mischvorrichtung arbeitet chargenweise. Zunächst sind die den Ablaß des Wassers aus dem Wasserabmeßbehälter 3 steuernden Ventile 8, 9, 13, 16 und 19 geschlossen. Der Wasserabmeßbehälter 3 wird bis zum eingestellten Füllstand aufgefüllt. Während dieser Zeit werden auch die Komponentenabmeßbehälter 10, 11, 17 restlos gefüllt. Im Falle des Komponentenabmeßbehälters 10 werden dazu die Ventile 23, 24 geöffnet, so daß der Abmeßbehälter vollläuft. Auf dieselbe Weise werden auch die beiden anderen Komponentenabmeßbehälter gefüllt. Nun wird der Wasserzufluß mit dem Ventil 2 geschlossen. Ebenso werden beim Abmeßbehälter 10 die Ventile 23 und 24 geschlossen und auch die entsprechenden Ventile bei den Komponentenabmeßbehältern 11 und 17.

Alle Komponentenabmeßbehälter enthalten jetzt ein genau abgemessenes Volumen der entsprechenden Komponente. Nun werden die den Wasserablauf aus dem Wasserabmeßbehälter 3 steuernden Ventile 8, 9, 13, 16 und 19 geöffnet. Wasser läuft nun aus dem Wasserabmeßbehälter 3 ab und durchströmt dabei die Komponentenabmeßbehälter 10, 11 und 17 und nimmt die in diesen befindlichen Komponenten unter gleichzeitiger Vermischung mit in den Sammelbehälter 14, in dem gegebenenfalls eine Nachmischung stattfindet.

Die Ventile 8, 9, 13, 16 und 19 werden geschlossen. Der Zyklus kann wieder von vorn beginnen.

Soweit entspricht die dargestellte Konstruktion dem Stand der Technik gemäß der DE-PS 31 32 706. Nachteilig wäre hierbei, daß die Komponenteabmeßbehälter 10, 11 und 17 ein festes Volumen aufweisen. Lediglich das Verhältnis der drei kleineren Komponenten insgesamt zur Wasserkomponente könnte durch Verstellen des Füllstandsensors 4 im Wasserabmeßbehälter 3 eingestellt werden, nicht aber das Verhältnis der drei kleineren Komponenten zueinander.

Zum wechselseitigen Einstellen der kleineren Komponenten müssen wenigstens zwei in ihrer Dosierung verstellt werden.

Erfindungsgemäß geschieht dies durch Volumenverstellung der Abmeßbehälter 11 und 17. Es sind zwei Varianten dargestellt.

Der Abmeßbehälter 11 ist als Zylinder ausgebildet, in dem ein Kolben 27 mit einer Kolbenstange in Pfeilrichtung verschiebbar ist. An der Kolbenstange kann beispielsweise ein computergesteuerter Stellmotor angreifen. Auf diese Weise läßt sich das Volumen des Komponentenabmeßbehälters 11 in weiten Grenzen sehr genau einstellen.

Der Komponentenabmeßbehälter 17 ist ebenfalls volumeneinstellbar. Bei ihm ist in einer Wandöffnung 28 ein Verdrängerstab 29 abgedichtet verschiebbar gelagert, der in Stabrichtung (Pfeil) in den Behälter hineingeschoben oder aus diesem herausgezogen werden kann. Dadurch ergibt sich eine einstellbare Volumenverdrängung, über die das Innenvolumen des Abmeßbehälters 17 eingestellt werden kann. Der Verdrängerstab 29 kann in nicht dargestellter Weise ebenfalls mit einem Stellmotor, der an seinem äußeren Ende angreift, versehen sein.

Im dargestellten Ausführungsbeispiel ist der Verdrängerstab 29 mit sehr dickem Querschnitt dargestellt. Mit ihm kann also eine große Volumenänderung des Komponentenabmeßbehälters 17 erreicht werden. Wird der Stab dünner ausgeführt, so ergibt sich eine kleinere, aber sehr feinfühlige Einstellmöglichkeit. Gegebenenfalls kann ein solcher Verdrängerstab auch am Komponentenabmeßbehälter 11 zusätzlich zu dem verstellbaren Kolben 27 vorgesehen sein im Sinne einer Grob/Feineinstellung.

Der Verdrängerstab 29 kann von rundem Querschnitt oder beispielsweise auch von eckigem Querschnitt sein, ebenso die auch der Kolben 27 in dem als Zylinder ausgebildeten Komponentenabmeßbehälter 11 von rundem oder eckigem Querschnitt sein kann.

Der Komponentenvorratsbehälter 10 ist ohne Volumeneinstellmöglichkeit als einfacher Behälter ausgebildet. Wenn alle übrigen Komponenten eine Dosierungsverstellmöglichkeit aufweisen, kann eine Komponente mit fester Dosierung vorgegeben werden. Unter Umständen ist es aber aus regelungstechnischen Gründen einfacher, alle Komponentenvorratsbehälter einzeln regelbar auszubilden.

Im dargestellten Ausführungsbeispiel läuft das Wasser aus dem Wasserabmeßbehälter 3 in zwei parallelen Zweigen in den Sammelbehälter 14, wobei in dem einen Zweig nur ein Komponentenabmeßbehälter 10 und im anderen zwei hintereinandergeschaltete Komponentenabmeßbehälter 11, 17 durchlaufen werden. Es können aber auch beispielsweise alle Komponentenabmeßbehälter für die kleineren Komponenten parallel oder alle hintereinander geschaltet werden. Bei der für den dargestellten Ausführungsfall erforderlichen Verzweigung des Wasserstromes in die beiden parallelen Zweige ist durch geeignete Rohrdimensionierung bzw. Vorsehen von Blenden dafür Sorge zu tragen, daß in beiden parallelen Zweigen ausreichende Durchströmung und folglich ausreichende Ausspülung der kleineren Komponenten aus ihren Abmeßbehältern stattfindet.

Die dargestellte Ausführungsform dient zum dosierten Mischen von insgesamt vier Komponenten. Die Erfindung kann aber auch eingesetzt werden zur Mischung beispielsweise nur zweier Komponenten oder von mehr als vier Komponenten, wobei jeweils dafür Sorge zu tragen ist, daß höchstens einer der Komponentenabmeßbehälter eine unveränderliche Dosierung ergibt, die anderen aber eine einstellbare Dosierung ermöglichen. So kann beispielsweise der Wasserabmeßbehälter, also der Abmeßbehälter für die größte Komponente mit fester Abmessung ausgebildet sein, wobei nur der bzw. die Komponentenabmeßbehälter für die kleineren Komponenten einstellbar sind. Hat man die Wahl bei zwei Komponentenabmeßbehältern für Komponenten unterschiedlicher Größe nur einen der beiden einstellbar zu gestalten, so ist es aber aus Gründen der Abmeßgenauigkeit grundsätzlich günstiger, den größeren Abmeßbehälter einstellbar zu gestalten.

## Ansprüche

1. Vorrichtung zum chargenweisen Mischen eines Getränkes aus flüssigen Komponenten, mit Abmeßbehältern für die einzelnen Komponenten, von denen Abmeßbehälter der kleineren Komponenten restlos gefüllt und beim Entleeren der größten Komponente von dieser durchströmt werden, dadurch gekennzeichnet, daß Abmeßbehälter (11, 17) der kleineren Komponenten ($K_1$, $K_2$) ein einstellbares Volumen aufweisen.

2. Vorrichtung nach Anspruch 1, dadurch gekennzeichnet, daß der volumeneinstellbare Abmeßbehälter als Zylinder (11) mit verschiebbarem Kolben (27) ausgebildet ist.

3. Vorrichtung nach einem der vorhergehenden Ansprüche, dadurch gekennzeichnet, daß in einer Wandöffnung (28) des volumeneinstellbaren Abmeßbehälters (17) ein Verdrängerstab (29) abgedichtet längsverschiebbar gelagert ist.

EP 0 382 025 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-3 132 706 (ORTMANN)<br>* Zusammenfassung; Fig. *<br>--- | 1-3 | B 01 F 3/08 |
| Y | US-A-3 189 233 (WILSON)<br>* Spalte 2, Zeile 60 - Spalte 3, Zeile 13; Fig. *<br>--- | 1-3 | |
| A | US-A-1 599 416 (JONES)<br>--- | | |
| A | FR-A-1 305 429 (GIANNELLI)<br>----- | | |
| | | | **RECHERCHIERTE SACHGEBIETE (Int. Cl.5)**<br><br>B 01 F<br>B 28 C |

Der vorliegende Recherchenbericht wurde für alle Patentansprüche erstellt

| Recherchenort | Abschlußdatum der Recherche | Prüfer |
|---|---|---|
| DEN HAAG | 09-05-1990 | PEETERS S. |